# EUROPÄISCHE PATENTSCHRIFT

(11) **EP 3 108 210 B1**
(45) Veröffentlichungstag und Bekanntmachung des Hinweises auf die Patenterteilung: **06.01.2021**
(21) Anmeldenummer: 15825924.2
(22) Anmeldetag: 20.11.2015
(51) Int. Cl.: G01D 5/14

(54) **SENSORANORDNUNG UND VERFAHREN ZUM BESTIMMEN EINER POSITION UND/ODER EINER POSITIONSÄNDERUNG EINES MESSOBJEKTS**
SENSOR ARRANGEMENT AND METHOD FOR DETERMINING A POSITION AND/OR A CHANGE IN THE POSITION OF A MEASUREMENT OBJECT
DISPOSITIF DE DÉTECTION ET PROCÉDÉ DE DÉTERMINATION D'UNE POSITION ET/OU D'UN CHANGEMENT DE POSITION D'UN OBJET À MESURER

(30) Priorität: 24.11.2014 DE 102014223884
(43) Veröffentlichungstag der Anmeldung: 28.12.2016
(73) Patentinhaber: Micro-Epsilon Messtechnik GmbH & Co. KG, 94496 Ortenburg (DE)
(72) Erfinder: MEDNIKOV, Felix, 94496 Ortenburg (DE); HOFER, Johann, 94496 Ortenburg (DE); PFAFFINGER, Christian, 94099 Ruhstorf a. d. Rott (DE)
(74) Vertreter: Patent- und Rechtsanwälte Ullrich & Naumann
(86) Internationale Anmeldenummer: PCT/DE2015/200514
(87) Internationale Veröffentlichungsnummer: WO 2016/082830

(56) Entgegenhaltungen:
- EP-A1- 1 826 533
- EP-A2- 2 009 404
- DE-U1- 20 307 652
- DE-U1- 20 307 652
- US-A1- 2006 164 074
- US-A1- 2007 229 058

## Beschreibung

Die Erfindung betrifft eine Sensoranordnung zum Bestimmen einer Position und/ oder einer Positionsänderung eines Messobjekts.

Sensoranordnungen und Verfahren zum Bestimmen einer Position und/oder einer Positionsänderung finden in der Praxis weite Verbreitung. Hierbei wird die Position eines Messobjekts relativ zu einem Bezugspunkt gemessen. Für eine berührungslose Messung kommen sehr häufig kapazitive oder induktive Messverfahren zum Einsatz. Eine aus der Praxis bekannte Sensorgattung nutzt einen Magneten und einen Magnetfeldsensor. Eine Ausgestaltung eines derartigen Sensors ist beispielsweise aus der DE 40 21 105 A1 bekannt. Dort wird die Rotationsbewegung eines mit Nord-Süd-Polen kodierten Geberrades relativ zu einem Sensorarray bestimmt. Durch geschickte Anordnung der Sensoren relativ zu dem Geberrad kann aus den Messsignalen der Sensoren auf die Lage des Geberrades geschlossen werden.

Bei einer anderen Ausgestaltung wird durch den Magnetfeldsensor ein Messsignal erzeugt, das von dem Anteil des Magnetfelds des Magneten abhängt, der bei dem Magnetfeldsensor noch vorhanden ist. Da das Magnetfeld eines Magneten mit zunehmendem Abstand von dem Magneten abnimmt, kann aus dem Messsignal auf den Abstand zwischen Magneten und Magnetfeldsensor geschlossen werden. Eine derartige Sensoranordnung ist beispielsweise in der WO 2008/074317 A2 offenbart. Durch Einschränkung der relativen Bewegung zwischen Magneten und Magnetfeldsensor, beispielsweise entlang einer Gerade oder entlang eines Kreisbogens, kann aus dem Abstand auf die Position des Magneten relativ zu dem Magnetfeldsensor geschlossen werden. In vielen Fällen ist der Magnetfeldsensor ortsfest angeordnet, beispielsweise an einem Maschinenrahmen, während der Magnet an dem eigentlichen Messobjekt angebracht ist, beispielsweise einem beweglichen Teil der Maschine. Da durch Anbringen des Magneten an dem Messobjekt die Bewegungen des Magneten und des Messobjekts gekoppelt sind, kann aus der Position des Magneten relativ zum Magnetfeldsensor auf die Position des Messobjekts geschlossen werden.

Eine andere Sensoranordnung ist in der EP 1 132 717 A1 offenbart. Dort sind zwei ringförmige Permanentmagnete an einer Achse angebracht, die relativ zu einem Magnetfeldsensor verschiebbar ist. Der Magnetfeldsensor weist magnetoresistive Elemente auf, die die Richtung eines Magnetfelds erkennen können. Durch Auswertung der magnetoresistiven Elemente kann die Position der Achse relativ zu dem Sensor bestimmt werden.

Eine Sensorvorrichtung zur Erfassung einer Kolbenposition, die ebenfalls einen Magneten und einen Magnetfeldsensor verwendet, ist beispielsweise aus der DE 35 10 601 A1 bekannt. Eine Kolbenstange trägt einen Arbeitskolben, in dem ein scheibenförmiger Körper aus magnetisierbarem Material angeordnet ist. Der scheibenförmige Körper erstreckt sich radial von der Kolbenstange bis zu der inneren Zylinderwandung. An der Kolbenstange nahe des scheibenförmigen Körpers ist ein ringförmiger Permanentmagnet angeordnet, dessen Nord-Süd-Richtung parallel zu der Achse der Kolbenstange ausgerichtet ist. Dadurch bündelt der scheibenförmige Körper das Magnetfeld des Magneten und lenkt es an die Zylinderwandung. An der Außenseite des Zylinders ist ein Magnetfeldsensor angebracht, der das durch den Magneten erzeugte und durch den scheibenförmigen Körper an die Zylinderwandung gelenkte Magnetfeld detektiert. Aus dem Messsignal des Magnetfeldsensors kann auf die Position des Arbeitskolbens geschlossen werden. Nachteilig an diesem Sensor ist, dass der detektierbare Kolbenhub relativ eingeschränkt ist. Ferner weist die Sensoranordnung ein erheblich nichtlineares Verhalten auf. Des Weiteren ist der Einsatzbereich der Anordnung durch die Notwendigkeit einer in dem Kolben angeordneten Scheibe eingeschränkt.

Ein anderer Wegmesssensor ist in der US 2007/0229058 A1 offenbart. Dieser Wegmesssensor umfasst zwei Magnete, einen ferromagnetischen Stab, einen Flusskonzentrator und einen Magnetfeldsensor. Die beiden Magnete sind jeweils an den Stirnseiten des ferromagnetischen Stabes angeordnet und jeweils derart orientiert, dass an der einen Seite des Stabs ein Südpol und an der anderen Seite ein Nordpol angeordnet ist. Um den ferromagnetischen Stab und die beiden Magnete herum ist ein nicht-magnetisches Gehäuse angeordnet. Der Flusskonzentrator ist ringförmig ausgebildet und umschließt den ferromagnetischen Stab mit einem Abstand, der durch das nicht-magnetische Gehäuse definiert ist. Der Magnetfeldsensor ist an der Außenseite des Flusskonzentrators angeordnet und misst ein durch den Flusskonzentrator konzentriertes Magnetfeld.

Die EP 2 009 404 A2 offenbart eine Magnetstruktur zur Erfassung einer Relativbewegung zwischen der Magnetstruktur und einem Magnetfeldsensor. In einem Ausführungsbeispiel ist an den beiden Stirnseiten eines ferromagnetischen Körpers jeweils ein Magnet angeordnet, wobei der ferromagnetische Körper und die Magnete denselben Durchmesser aufweisen. Die beiden Magnete sind so angeordnet, dass jeweils der Nordpol in Richtung des ferromagnetischen Körpers zeigt. Dadurch wird das Magnetfeld der Magnete dazu veranlasst, den ferromagnetischen Körper an dessen Seitenwandungen zu verlassen. Ein auf der Längsseite der Magnetstruktur angeordneter Magnetfeldsensor erfasst dieses Magnetfeld und lässt Rückschlüsse auf die Relativbewegung zu.

Die US 2006/0164074 A1 offenbart einen Sensor zum Messen einer Position. Hierzu wird ein erstes Polstück aus einem magnetisch leitfähigen Blech verwendet, an dessen längsseitigen Enden jeweils ein Magnetfeldsensor angeordnet ist. Ein Magnet ist beabstandet zu dem ersten Polstück angeordnet und parallel zur Längsachse des ersten Polstücks bewegbar. Das erste Polstück leitet das Magnetfeld des Magneten zu den Magnetfeldsensoren hin. Aus den Messsignalen der beiden Magnetsensoren kann auf die Position des Magnets relativ zu dem ersten Polstück geschlossen werden.

Der vorliegenden Erfindung liegt die Aufgabe zugrunde, eine Sensoranordnung und ein Verfahren der eingangs genannten Art derart auszugestalten und weiterzubilden, dass ein möglichst großer Messbereich bei gleichzeitig möglichst linearem Verhalten der Sensoranordnung erzielbar ist.

Erfindungsgemäß wird die voranstehende Aufgabe durch die Merkmale des Anspruchs 1 gelöst. Danach umfasst die in Rede stehende Sensoranordnung genau einen Magneten, einen stabförmigen Körper und einen Magnetfeldsensor, wobei der Magnet und der Magnetfeldsensor relativ zueinander in einer Bewegungsrichtung x bewegbar sind, wobei der Magnet ein Magnetfeld erzeugt, wobei Bewegungen des Magneten und des Messobjekts oder Bewegungen des Magnetfeldsensors und des Messobjekts gekoppelt sind, wobei der stabförmige Körper aus einem ferromagnetischen Material gebildet ist und in Längsrichtung eine deutlich größere Abmessung hat als in Querrichtung, wobei eine Relativbewegung zwischen dem stabförmigen Körper und dem Magneten nicht stattfindet, wobei nämlich der stabförmige Körper mit dem Magneten verbunden sein kann, wobei der stabförmige Körper das Magnetfeld des Magneten zumindest teilweise in Richtung des Magnetfeldsensors lenkt, wobei ein Teil des Magnetfelds den stabförmigen Köper an dessen Längsseite verlässt, wodurch an einer Oberfläche des stabförmigen Körpers ein Magnetfeld detektierbar ist, dessen Feldstärke mit zunehmendem Abstand von dem Magneten abnimmt, wobei der stabförmige Körper parallel zu der Bewegungsrichtung x angeordnet ist,
wobei der Magnetfeldsensor an einer Längsseite des stabförmigen Körpers angeordnet ist und zum Erzeugen eines Messsignals aus einem Anteil des Magnetfelds, das an einer der Längsseiten des stabförmigen Körpers bei dem Magnetfeldsensor aus dem stabförmigen Körper austritt, ausgestaltet ist, wodurch aus dem Messsignal die Position und/oder Positionsänderung des Messobjekts bestimmbar ist,
wobei Magnet und stabförmiger Körper derart aufeinander abgestimmt sind, dass der Magnet entlang des Körpers eine nicht-lineare Magnetfeldverteilung einprägt, wobei der Magnetfeldsensor eine nicht-lineare Kennlinie aufweist und wobei die nicht-lineare Magnetfeldverteilung entlang des stabförmigen Körpers und die nicht-lineare Kennlinie des Magnetfeldsensors derart aufeinander abgestimmt sind, dass ein Messsignal des Magnetfeldsensors eine annähernd lineare Kennlinie für die zu bestimmende Position und/oder Positionsänderung aufweist.

Hinsichtlich eines Verfahrens ist die voranstehende Aufgabe durch die Merkmale des Anspruchs 12 gelöst. Danach umfasst das Verfahren folgende Schritte:
Einprägen eines Magnetfelds in einem stabförmigen Körper aus einem ferromagnetischen Material mittels genau eines Magneten, wobei das Magnetfeld durch den stabförmigen Körper zumindest teilweise in Richtung eines Magnetfeldsensors gelenkt wird, wobei ein Teil des Magnetfelds den stabförmigen Köper an dessen Längsseite verlässt, wodurch an einer Oberfläche des stabförmigen Körpers ein Magnetfeld detektierbar ist, dessen Feldstärke mit zunehmendem Abstand von dem Magneten abnimmt, und wobei der stabförmige Körper parallel zu einer Bewegungsrichtung x angeordnet ist, in der der Magnetfeldsensor und/oder der Magnet relativ zueinander bewegbar sind,
Detektieren eines an einer Längsseite des stabförmigen Körpers austretenden Magnetfelds mittels des Magnetfeldsensors zum Erzeugen eines Messsignals und
Bestimmen einer Position und/oder einer Positionsänderung des Messobjekts aus dem Messsignal,
wobei der Körper in Längsrichtung eine deutlich größere Abmessung hat als in Querrichtung und wobei eine Relativbewegung zwischen dem Körper und dem Magneten nicht stattfindet, wobei nämlich der stabförmige Körper mit dem Magneten verbunden sein kann,
wobei Magnet und stabförmiger Körper derart aufeinander abgestimmt sind, dass der Magnet entlang des Körpers eine nicht-lineare Magnetfeldverteilung einprägt, wobei der Magnetfeldsensor eine nicht-lineare Kennlinie aufweist und wobei die nicht-lineare Magnetfeldverteilung entlang des stabförmigen Körpers und die nicht-lineare Kennlinie des Magnetfeldsensors derart aufeinander abgestimmt sind, dass ein Messsignal des Magnetfeldsensors eine annähernd lineare Kennlinie für die zu bestimmende Position und/oder Positionsänderung aufweist.

In erfindungsgemäßer Weise ist zunächst erkannt worden, dass bei einer Sensoranordnung, die einen Magneten und einen Magnetfeldsensor umfassen, ein stabförmiger Körper aus einem ferromagnetischen Material zur Vergrößerung des Messbereichs verwendet werden kann, wobei der Körper in Längsrichtung eine deutlich größere Abmessung hat als in Querrichtung und wobei eine Relativbewegung zwischen dem stabförmigen Körper und dem Magneten nicht stattfindet, wobei nämlich der stabförmige Körper mit dem Magneten verbunden sein kann. Erfindungsgemäß ist nämlich erkannt worden, dass ein stabförmiger Körper aus einem ferromagnetischen Material das Magnetfeld eines Magneten nicht vollständig von Stirnseite zu Stirnseite leitet. Vielmehr verlässt ein Teil des Magnetfelds den stabförmigen Köper an dessen Längsseiten, wodurch an der Oberfläche des stabförmigen Körpers ein Magnetfeld detektierbar ist, dessen Feldstärke mit zunehmendem Abstand von dem Magneten abnimmt. Wenn das aus dem stabförmigen Körper austretende Magnetfeld mit einem Magnetfeldsensor geeignet detektiert wird, kann ein Maß für den Abstand zwischen Magnetfeldsensor und Magneten gebildet werden, wobei durch den stabförmigen Körper der Messbereich der Sensoranordnung deutlich vergrößert werden kann. Daraus lässt sich die Position eines Messobjekts, dessen Bewegung von der Bewegung des Magneten oder des Magnetfeldsensors abhängt, bestimmen.

Erfindungsgemäß ist daher ein stabförmiger Körper aus ferromagnetischem Material im Einflussbereich des Magneten und parallel zu einer Bewegungsrichtung x angeordnet, entlang der der Magnet und/oder der Magnetfeldsensor relativ zueinander bewegbar sind. "Im Einflussbereich des Magneten" bedeutet in diesem Kontext, dass der Magnet in der Lage ist, einen nicht unerheblichen Anteil seines Magnetfelds in den stabförmigen Körper einzukoppeln. Dies bedingt im Normalfall, dass der Magnet in relativer Nähe des stabförmigen Körpers angeordnet ist. Denkbar wären hierbei Abstände von wenigen Zentimetern oder darunter. Besonders gut wird eine Einkopplung dann funktionieren, wenn der Abstand wenige Millimeter oder darunter beträgt, bis hin zu einem Kontakt zwischen stabförmigem Körper und Magneten. Durch die Anordnung des stabförmigen Körpers im Einflussbereich des Magneten wird das Magnetfeld des Magneten zumindest teilweise durch den stabförmigen Körper in dessen Längsrichtung gelenkt.

Zur Detektion eines Anteils des Magnetfelds des Magneten, das an einer der Längsseiten des stabförmigen Körpers austritt, ist an einer Längsseite des stabförmigen Körpers ein Magnetfeldsensor angeordnet. Der Magnetfeldsensor erzeugt in Abhängigkeit von dem detektierten Anteil des Magnetfelds ein Messsignal, das für die Position des Messobjekts repräsentativ ist. Auf diese Weise wird die Position des Messobjekts bestimmbar. Aus der Änderung des Messsignals lässt sich eine Positionsänderung bestimmen.

Der den stabförmigen Körper verlassende Anteil des Magnetfelds des Magneten hat dabei eine nicht-linear, monoton abfallende Magnetfeldstärte längs des stabförmigen Köpers. Die Feldstärke an der Oberfläche einer Längsseite des stabförmigen Körpers ist in der Nähe des Magneten am höchsten und nimmt Richtung Ende des stabförmigen Körpers ab. Das an der Oberfläche des stabförmigen Körpers austretende Magnetfeld kann mit einem üblichen Magnetfeldsensor, wie beispielsweise einem Hall-Sensor oder Sensoren nach dem GMR (Giant Magneto-Resistiver) oder AMR (Anisotroper Magneto-Resistiver)-Effekt gemessen werden.

Es wird ein Magnetfeldsensor verwendet, der eine nicht-lineare Kennlinie aufweist. Durch Kombination dieser beiden Effekten kann eine annähernd lineare Kennlinie zwischen Messsignal und dem Abstand zwischen Magneten und Magnetfeldsensor realisiert werden. Auf diese Weise ist sowohl ein großer, kontinuierlicher Messbereich als auch eine annähernd lineare Kennlinie erreichbar.

Der Begriff stabförmige Körper ist relativ allgemein zu verstehen. Wesentlich ist dabei, dass der Körper in Längsrichtung eine deutlich größere Abmessung hat als in Querrichtung. Denkbar sind beispielsweise Verhältnisse zwischen Querabmessung und Längsabmessung von 1:10 oder darüber. Zur Vermeidung von unerwünschten Streuungen an der Oberfläche des stabförmigen Körpers ist dessen Querschnitt vorzugsweise längs des stabförmigen Körpers weitgehend konstant. Der Querschnitt selbst ist weitgehend beliebig. Quadratische Querschnitte sind ebenso verwendbar wie hexagonale, elliptische, dreieckförmige oder andere beliebig geformte geometrischen Gebilde. Vorzugsweise ist jedoch der Querschnitt rund ausgebildet, so dass der stabförmige Körper zylindrisch ist, wobei die Stirnseiten nicht zwangsläufig flach ausgebildet sein müssen. Besonders vorteilhaft bei einer runden Ausgestaltung ist die Rotationssymmetrie, wodurch sich der stabförmige Körper auch drehen kann, ohne dass die Messwerte beeinflusst werden.

Die parallele Anordnung des stabförmigen Körpers zur Bewegungsrichtung x bedeutet, dass eine Längsachse des stabförmigen Körpers parallel zur Bewegungsrichtung ausgerichtet ist. Bei einem zylindrischen Körper ist diese Achse beispielsweise die Zylinderachse. Aber auch bei stabförmigen Körpern mit einem nicht-runden Querschnitt können derartige Achsen definiert werden, die parallel zu einer Bewegungsrichtung x angeordnet sein können. Auch wenn die erfindungsgemäße Sensoranordnung vorzugsweise bei translatorischen Bewegungen eines Messobjekts Anwendung findet, so ist auch bei einer Bewegung entlang einer Kreisbahn oder einer anderweitig gebogenen Kurve eine "parallele" Anordnung des stabförmigen Körpers möglich. In diesem Fall würde der stabförmige Körper den Änderungen der Bewegungsrichtung folgen. Wenn beispielsweise die Bewegungsrichtung des Messobjekts eine Kreisbahn darstellt, wäre der stabförmige Körper entsprechend der Kreisbahn ebenfalls gebogen.

Um sicherzustellen, dass an den Längsseiten des stabförmigen Körpers auch tatsächlich Magnetfelder in geeigneter Weise austreten, sollten die geometrischen und/oder die magnetischen Eigenschaften (z.B. relative Permeabilität, Remanenz, Sättigungsfeldstärke) des stabförmigen Körpers an die geometrischen und/oder die magnetischen Eigenschaften des Magneten angepasst sein oder umgekehrt. Der stabförmige Körper sollte nicht in der Lage sein, den gesamten durch den Magneten erzeugten magnetischen Fluss zu lenken. Meist wird dies dadurch erreicht, dass der Magnet nach seinen geometrischen und/oder magnetischen Eigenschaften ausgewählt wird. So könnte er in Querrichtung eine gleiche oder größere Abmessung aufweisen als der stabförmige Körper. Damit ist sichergestellt, dass nicht der größte Teil des Magnetflusses bereits nahe am Magnet wieder über den Stabförmigen Körper und die Luftstrecke zurückgeleitet wird. Dies wäre nämlich der Fall, wenn der Durchmesser des Magneten deutlich kleiner als der des stabförmigen Körpers wäre. In diesem Fall würde der Magnetfluss bereits an der dem Magneten zugewandten Stirnseite austreten und sich über die Luftstrecke zum anderen Pol des Magneten schließen, ohne dass Magnetfelder in ausreichender Weise an der Längsseite des stabförmigen Körpers austreten. Um dies zu vermeiden, ist es vorteilhaft, wenn der Magnet quer zur Bewegungsrichtung x eine annähernd gleiche oder größere Abmessung aufweist als der stabförmige Körper.

Mit dem Begriff Luftstrecke in diesem Zusammenhang das Medium bezeichnet, das den stabförmigen Körper und/oder den Magneten umgibt und nicht aus ferromagnetischem Material besteht. Die Luftstrecke könnte auch andere flüssige oder gasförmige Medien oder nichtferromagnetische Festkörper umfassen, also im weitesten Sinne Medien, die den Magnetfluss selbst nicht oder nur gering beeinflussen.

Ferner bietet es sich an, den durch den Magneten erzeugten Magnetfluss an die Permeabilität des stabförmigen Körpers anzupassen. Für einen stabförmigen Körper mit sehr hoher relativer Permeabilität ist ein größerer magnetischer Fluss und somit eine höhere Magnetfeldstärke notwendig. In diesem Fall könnte man beispielsweise Selten-Erden-Magneten verwenden. Besonders günstig erweist es sich, abhängig von dem gewünschten Messbereich der Anordnung eine geeignete Kombination von geometrischen und/oder magnetischen Eigenschaften von stabförmigen Körper und Magnet zu wählen. Einem Fachmann wird einleuchten, dass diese Anforderungen einfach zu erfüllen sind und wie dies erreicht werden kann.

Der stabförmige Körper ist mit dem Magneten verbunden, d.h. Relativbewegungen zwischen stabförmigen Körper und Magneten finden nicht statt. Auf diese Weise bewegen sich der stabförmige Körper und der Magnet relativ zu dem Magnetfeldsensor. Dies beinhaltet nicht zwangsläufig, dass der Magnetfeldsensor ortsfest sein muss, auch wenn dies in vielen praktischen Anwendungen der Fall sein dürfte. Es ist auch möglich, dass der Magnet und der stabförmige Körper ortsfest sind und sich der Magnetfeldsensor relativ zu dem Magneten und dem stabförmigen Körper bewegt. Prinzipiell kann auch weder stabförmiger Körper mit Magnet noch Magnetfeldsensor ortsfest sein.

Die Verbindung zwischen stabförmigem Körper und Magneten kann dabei auf beliebige Weise hergestellt sein. Denkbar wäre dabei eine lösbare Verbindung. In der einfachsten Ausführung könnte der Magnet nur durch seine eigene Magnetkraft mit dem stabförmigen Körper verbunden sein. Bei Magneten mit hoher Magnetkraft, wie beispielsweise Selten-Erden-Magneten, kann dies bei einfachen Anwendungen bereits genügen. Der Vorteil dieser Anordnung ist, dass sie auch einfach wieder gelöst werden kann. Der Magnet könnte aber auch mit einer Schraubverbindung an dem stabförmigen Körper befestigt sein, so dass auch hierbei stabförmiger Körper und Magnet lösbar miteinander verbunden sind.

Da derartige Sensoranordnungen jedoch über die gesamte Lebensdauer unverändert bleiben dürften (in den meisten Fällen sogar sollten), ist der Magnet vorzugsweise mit dem stabförmigen Körper verklebt. Geeignete Klebstoffe sind aus dem Stand der Technik hinlänglich bekannt. Die genannten lösbaren und nichtlösbaren Verbindungen stellen lediglich einige bevorzugte Beispiele dar. Diese sind jedoch nicht als Einschränkung der Befestigungsmöglichkeit zu verstehen.

Zum Erzielen einer möglichst großen Auswirkung des erfindungsgemäß genutzten Effekts ist hierbei der Magnet vorzugsweise an einem Endbereich des stabförmigen Körpers angeordnet. "Endbereich" bedeutet, dass der Magnet an der Stirnseite des stabförmigen Körpers oder an einer Längsseite weniger als 25% der Länge des stabförmigen Körpers von der Stirnseite des stabförmigen Körpers entfernt, besonders bevorzugter Weise weniger als 10% der Länge des stabförmigen Körpers von der Stirnseite des stabförmigen Körpers entfernt angeordnet ist.

Besonders bevorzugter Weise ist der Magnet an der Stirnseite des stabförmigen Körpers angeordnet, wobei die Nord-Süd-Richtung des Magneten vorzugsweise parallel zu der Bewegungsrichtung x ausgerichtet ist. Da der stabförmige Körper parallel zu der Bewegungsrichtung x angeordnet ist, bedeutet dies, dass die Nord-Süd-Richtung parallel zu dem stabförmigen Körper ist. Besonders vorteilhaft ist eine stirnseitige Anordnung bei sich drehenden stabförmigen Körpern mit nahezu rundem Querschnitt. Aufgrund der Rotationssymmetrie der Anordnung ist dann die Magnetfeldverteilung entlang des stabförmigen Körpers unabhängig von der Rotation, so dass nur die Bewegung in x-Richtung detektiert wird und ein störender Einfluss durch die Drehung vermieden wird.

In einer zweiten bevorzugten Ausgestaltung der Sensoranordnung ist der Magnetfeldsensor mit dem stabförmigen Körper verbunden, d.h. Relativbewegungen zwischen stabförmigem Körper und Magnetfeldsensor finden nicht statt. Dadurch bewegt sich der Magnet relativ zu dem Magnetfeldsensor und dem stabförmigen Körper. Dies bedeutet nicht zwangsläufig, dass der Magnetfeldsensor und der stabförmige Körper ortsfest sein müssen, auch wenn diese in den meisten praktischen Anwendungsszenarien der Fall sein dürfte. Es ist auch möglich, dass der Magnet ortsfest ist, während sich Magnetfeldsensor und stabförmiger Körper relativ dazu bewegen können. Es ist auch denkbar, dass weder Magnet noch Magnetfeldsensor und stabförmiger Magnet ortsfest sind.

Auch hier kann die Verbindung zwischen stabförmigem Körper und Magnetfeldsensor auf verschiedenste Arten realisiert sein. Klebeverbindungen sind ebenso nutzbar wie Schraubverbindungen und andere lösbare oder nicht lösbare Verbindungen.

Wie bereits ausgeführt, kann der Magnet an einer Längsseite des stabförmigen Körpers angeordnet sein. Auch dies ist als "in dem Einflussbereich des Magneten" im Sinne der beanspruchten Lehre zu verstehen. Bei dieser Anordnung ist die Nord-Süd-Richtung des Magneten vorzugsweise senkrecht zu der Bewegungsrichtung x ausgerichtet. Auf diese Weise wird - wie bei einer stirnseitigen Anordnung des Magneten - ein Magnetfeld in den stabförmigen Körper eingekoppelt und verlässt den stabförmigen Körper längs des stabförmigen Körpers wieder.

Eine Anordnung an der Längsseite des stabförmigen Körpers lässt sich bei beiden zuvor angeführten bevorzugten Ausgestaltungen anwenden. Bei einer möglichen Relativbewegung zwischen stabförmigen Körper und Magneten ist der Magnet von dem stabförmigen Körper beabstandet. Bei einer Verbindung des Magneten mit dem stabförmigen Körper ist der Magnetfeldsensor vorzugsweise weniger als 25% der Länge des stabförmigen Körpers von der Stirnseite des stabförmigen Körpers entfernt, besonders bevorzugter Weise weniger als 10% der Länge des stabförmigen Körpers von der Stirnseite des stabförmigen Körpers entfernt angeordnet.

Wie bereits ausgeführt kann die Geometrie des Magneten in Abhängigkeit der jeweiligen Anforderung gewählt sein. Besonders einfach verfügbar ist ein Stabmagnet, der zylindrisch oder rechteckig ausgeführt sein kann. Statt eines stabförmigen Magneten kann auch ein ringförmiger Magnet verwendet werden. Auch dieser ist vorzugsweise am Endbereich des stabförmigen Körpers angeordnet. In diesem Fall ist der ringförmige Magnet vorzugsweise derart ausgestaltet, dass er um den stabförmigen Körper herum angeordnet werden kann. Vorzugsweise ist der Innendurchmesser des ringförmigen Magneten dabei geringfügig größer als der Außendurchmesser des stabförmigen Körpers. Wenn Magnet und stabförmiger Körper miteinander verbunden sind, kann zwischen dem ringförmigen Magneten und dem stabförmigen Körper eine form- oder gar kraftschlüssige Verbindung gegeben sein. Vorzugsweise ist die Nord-Süd-Richtung des ringförmigen Magneten senkrecht zu dem Ring, also parallel zu seiner Symmetrieachse, ausgerichtet. Bei Anordnung des ringförmigen Magneten um den stabförmigen Körper herum ist die Nord-Süd-Richtung dann parallel zu der Bewegungsrichtung x. Auch in dieser Ausgestaltung kann der Magnet ein Magnetfeld in den stabförmigen Körper einkoppeln und dabei an der Oberfläche des stabförmigen Magneten ein austretendes Magnetfeld hervorrufen.

In einer besonders vorteilhaften Ausführung ist zwischen dem ringförmigen Magneten und dem stabförmigen Körper ein Luftspalt vorhanden. Es hat sich gezeigt, dass ein nicht vorhandener oder sehr geringer Luftspalt dazu führen kann, dass sich die Magnetfeldlinien bereits in kurzer Entfernung zum Magneten wieder zu diesem zurückschließen (magnetischer Kurzschluss), wodurch lediglich ein geringer Messbereich erzielt wird. Der Begriff Luftspalt bezeichnet wiederum ein Medium, das nichtferromagnetisch ist. Auch ein Klebespalt ist in diesem Sinne als Luftspalt zu verstehen. In dieser Ausführung ist die Nord-Süd-Richtung des ringförmigen Magneten parallel zu dem Ring, also parallel zur Bewegungsrichtung ausgerichtet. Durch den Luftspalt werden die Magnetfeldlinien in den stabförmigen Körper geleitet. Zusätzlich könnten mit geeigneten ferromagnetischen Leitkörpern die Magnetfeldlinien in den Körper geleitet werden. Beispielsweise könnte am ringförmigen Magneten ein Ring aus ferromagnetischem Material angebracht sein, dessen Innendurchmesser geringer ist als der des ringförmigen Magneten, wodurch eine gewünschte Einleitung der Magnetfelder in den stabförmigen Körper erzielt wird. Durch die geschickte Anordnung des Magneten, der Größe des Luftspaltes und mit der Verwendung von ferromagnetischen Leitkörpern kann je nach Anforderungen der Magnetfluss in geeigneter Weise gelenkt werden.

Die Verwendung eines ringförmigen Magneten ist sowohl bei einer Verbindung zwischen stabförmigen Körper und Magneten als auch bei einer Verbindung zwischen Magnetfeldsensor und stabförmigen Körper, d.h. bei einer beweglichen Anordnung zwischen ringförmigen Magnet und stabförmigen Körper anwendbar.

Anstelle eines ringförmigen Magneten oder eines stabförmigen Magneten kann auch ein scheibenförmiger Magnet verwendet werden, für den die vorgenannten Ausführungen zu ringförmigen Magneten analog anzuwenden sind.

Prinzipiell wird durch die erfindungsgemäße Sensoranordnung zunächst ein Abstand zwischen einem Magnetfeldsensor und einem Magneten bestimmt, wobei das Magnetfeld des Magneten durch den stabförmigen Körper gelenkt wird. Damit eine Position und/oder eine Positionsänderung eines Messobjekts bestimmt werden kann, muss eine Bewegung des Messobjekts mit einer Bewegung des Magnetfeldsensors oder eine Bewegung des Magneten gekoppelt sein. Bei einer Kopplung zwischen den Bewegungen des Messobjekts und des Magneten wird diese vorzugsweise dadurch erreicht, dass Magnet und Messobjekt miteinander verbunden sind. Dies kann dadurch erreicht werden, dass der Magnet an dem Messobjekt verschraubt oder mit diesem verklebt ist. Die bisherigen Ausführungen hinsichtlich des Verbindens von Bauteilen gelten entsprechend. Eine andere Möglichkeit einer derartigen Kopplung ist, dass der Magnet mit dem stabförmigen Körper verbunden ist und das Messobjekt wiederum mit dem stabförmigen Körper. Auf diese Weise ist ebenso die Bewegung von Messobjekt und Magnet miteinander gekoppelt. Messobjekt und Magnet sind damit quasi über den stabförmigen Körper miteinander verbunden.

Eine bevorzugte Ausgestaltung der Kopplung der Bewegung des Messobjekts und des Magnetfeldsensors besteht in einer Verbindung des Messobjekts mit dem Magnetfeldsensor. Dies kann dadurch erreicht werden, dass der Magnetfeldsensor an dem Messobjekt befestigt ist, beispielsweise mittels einer Schraub- oder Klebeverbindung. Wenn der stabförmige Körper mit dem Magnetfeldsensor verbunden ist, kann diese Kopplung der Bewegung zwischen Magnetfeldsensor und Messobjekt auch dadurch erreicht werden, dass das Messobjekt mit dem stabförmigen Körper und der stabförmige Körper mit dem Magnetfeldsensor verbunden ist. Dadurch sind Messobjekt und Magnetfeldsensor über den stabförmigen Körper miteinander verbunden.

Bei den genannten Arten der Kopplung der Bewegungen von Messobjekt und Magnet oder Magnetfeldsensor muss das Messobjekt nicht zwangsläufig ein eigenes Element sein. Vielmehr ist es auch möglich, dass das Messobjekt durch ein Bestandteil der Sensoranordnung gebildet ist. Eine bevorzugte Ausgestaltung ist, dass das Messobjekt durch den stabförmigen Körper selbst gebildet ist.

In einem ersten bevorzugten Anwendungsszenarium der erfindungsgemäßen Sensoranordnung taucht der stabförmige Körper in ein Rohr ein. Der Magnetfeldsensor ist in diesem Fall an einer Wandung des Rohrs angebracht. Besteht das Rohr aus einem ferromagnetischen Werkstoff, kann der Magnetfeldsensor an der Stirnseite des Rohres angebracht werden. Besteht das Rohr aus nichtferromagnetischem Werkstoff, kann der Magnetfeldsensor aber auch außen am Rohr angebracht werden, da nichtferromagnetische Medien den Magnetfluss nicht beeinflussen, wodurch Magnetfelder auch durch das Rohr hindurchdringen. Das Rohr kann dabei ortsfest sein, wodurch die gemessene Position bzw. Positionsänderung die Eintauchtiefe des stabförmigen Körpers in das Rohr darstellt. Unter dieses Anwendungsbeispiel fällt auch, wenn der stabförmige Körper in eine Bohrung oder Vertiefung in einem Körper eintaucht. In diesem Fall wäre der Magnetfeldsensor an der Oberfläche des Körpers außerhalb der Bohrung aber in der Nähe der Bohrung angeordnet. Auch hier würde die durch die Sensoranordnung bestimmte Position oder Positionsänderung durch die Eintauchtiefe des stabförmigen Körpers in den Körper definiert. Die Bewegung erfolgt dabei vorzugsweise in Längsrichtung der Bohrung oder Vertiefung.

In einem zweiten bevorzugten Anwendungsszenarium kommt die Sensoranordnung zur Bestimmung einer Kolbenposition zum Einsatz. In diesem Fall ist der stabförmige Körper durch eine Kolbenstange gebildet, an deren einen Ende ein Kolben befestigt ist, der sich in einem Zylinder bewegt. Der Magnetfeldsensor ist an einer Außenwandung des Zylinders angebracht, vorzugsweise an der Stirnseite des Zylinders, d.h. an der Seite des Zylinders, an der die Kolbenstange in den Zylinder geführt ist. Bei dieser Ausgestaltung der Sensoranordnung ist das Messobjekt durch den Kolben gebildet und die zu bestimmende Position und/oder Positionsänderung entspricht der Position und/oder Positionsänderung des Kolbens innerhalb des Zylinders. Derartige Sensoranordnungen können beispielsweise bei Hydraulikzylindern Verwendung finden.

Prinzipiell können im Zusammenhang mit der erfindungsgemäßen Sensoranordnung die verschiedensten Magnetfeldsensoren verwendet werden. Übliche Magnetfeldsensoren, wie Hallsensoren, AMR- oder GMR-Sensoren, haben eine Kennlinie, bei denen die Empfindlichkeit mit abnehmendem Magnetfeld ebenfalls sinkt. Mit diesen Sensoren wird dann durch den nichtlinearen Abfall des aus dem stabförmigen Körper austretenden Magnetfeldes die nichtlineare Kennlinie noch verstärkt. Das bedeutet, dass mit zunehmendem Abstand von Magnetfeldsensor zum Magneten die Empfindlichkeit der Sensoranordnung sinkt, wodurch eine nichtlineare Kennlinie resultiert.

Vorzugsweise kommt daher ein Magnetfeldsensor zum Einsatz, der nichtlineare Effekte weichmagnetischer Folien nutzt. Ein bevorzugte Ausgestaltung eines derartigen Sensors ist WO 2008/074317 A2 offenbart, auf deren Inhalt hiermit ausdrücklich Bezug genommen wird. Dieser Sensor umfasst eine Spule, in deren Einflussbereich eine weichmagnetische Folie angeordnet ist. Weichmagnetische Folien haben die Eigenschaft, dass sich deren relative Permeabilität in Abhängigkeit der Stärke eines auf sie einwirkenden Magnetfelds lokal und reversibel verändert. Ist eine derartige weichmagnetische Folie im Einflussbereich einer Spule angeordnet, ändert sich in Abhängigkeit der Stärke eines externen Magnetfelds auch die Induktivität der Spule. Diese Änderung der Induktivität kann messtechnisch erfasst und zur Erzeugung eines Messsignals herangezogen werden. Sehr häufig ist die Spule hierzu Teil eines Schwingkreises, beispielsweise eines Parallelschwingkreises, dessen Resonanzfrequenz sich in Abhängigkeit des externen Magnetfelds ändert. Aber auch alle anderen, in der Praxis bekannten Methoden der Messung der Induktivität einer Spule können verwendet werden. Wenn einem Messobjekt ein Magnet zugeordnet ist, kann durch einen derartigen Magnetfeldsensor die Feldstärke des Magneten am Ort des Sensors bestimmt werden und daraus der Abstand zwischen Magnet und Magnetfeldsensor.

Bei einer bevorzugten Ausgestaltung eines derartigen Sensors ist die Spule dabei in einer ersten Ebene angeordnet und die weichmagnetische Folie in einer zweiten Ebene. Dies kann beispielsweise besonders einfach dadurch erreicht werden, dass die Spule auf einem Substrat, beispielsweise einer Platine, in Form einer planaren Spule ausgebildet ist und die weichmagnetische Folie auf die Spule geklebt wird. Zwischen Spule und weichmagnetischer Folie kann dabei eine Isolierschicht angebracht sein. Bei einer derartigen Ausgestaltung des Magnetfeldsensors ist die erste Ebene vorzugsweise parallel zur zweiten Ebene angeordnet.

Dieser bevorzugte Sensor kann eine oder mehrere Sensorspulen aufweisen. Bei Verwendung mehrerer Spulen und bei Ausgestaltung durch Planarspulen können diese in einer Ebene nebeneinander angeordnet sein. Es wäre aber auch denkbar, die Spulen in mehreren Ebenen anzuordnen.

Bei Verwendung eines derartigen Sensors mit weichmagnetischer Folie ist die weichmagnetische Folie vorzugsweise senkrecht zu der Bewegungsrichtung x angeordnet. Da Magnetfelder des Magneten die Längsseiten des stabförmigen Körpers auch an der Oberfläche des stabförmigen Körpers verlassen, kann durch eine derartige Anordnung die senkrechte Komponente des austretenden Magnetfeldes gemessen werden. Durch die hohe Empfindlichkeit des Sensors kann somit eine sehr hohe Auflösung erreicht werden, da das an der Position des Magnetfeldsensors austretende Magnetfeld besonders präzise gemessen werden kann. Bei Verwendung eines derartigen Sensors mit weichmagnetischer Folie erhält man in besonders vorteilhafter Weise eine annähernd lineare Ausgangskennlinie. Die relative Permeabilität µᵣ der weichmagnetischen Folie ohne äußeres Magnetfeld beginnt bei einem Startwert und steigt zunächst mit zunehmender Feldstärke H bis auf einen Maximalwert µ_{r,0} bei der Feldstärke Ho an. Danach fällt die Permeabilität mit steigender Feldstärke nichtlinear ab. Wenn die weichmagnetische Folie in einem Magnetfeldsensor eingesetzt ist, wird der Arbeitsbereich in diese fallende Flanke der Kennlinie gelegt.

Andererseits fällt die Feldstärke eines Magneten mit zunehmendem Abstand vom Magnete ebenfalls nichtlinear ab. Durch ferromagnetische Körper werden Magnetfelder in gewissem Sinne geleitet. Durch die erfindungsgemäße Anordnung des Magneten und den stabförmigen Körper werden die Magnetfelder entlang des Körpers geführt. Der den stabförmigen Körper verlassende Anteil des Magnetfelds des Magneten hat dabei einen nichtlinearen Abfall längs des stabförmigen Köpers. Die Feldstärke an der Oberfläche einer Längsseite des stabförmigen Körpers ist in der Nähe des Magneten am höchsten und nimmt nichtlinear Richtung Ende des stabförmigen Körpers ab. Durch Anordnung der weichmagnetischen Folie des Magnetfeldsensors senkrecht zur Bewegungsrichtung und nahe der Oberfläche des stabförmigen Körpers wird im Wesentlichen die senkrecht austretende Komponente des Magnetfeldes H_{⊥} gemessen. Der nichtlineare Abfall der Kennlinien gehorcht häufig einer Exponentialfunktion. Aber auch andere, monoton fallende, nichtlineare Kennlinien sind möglich. Durch die Kombination der beiden nichtlinearen Abhängigkeiten ergibt sich eine nahezu lineare Kennlinie in Abhängigkeit von der Position des Magneten relativ zum Magnetfeldsensor. Damit steht ein Messsignal zur Verfügung, das ohne aufwändige Linearisierung einen linearen Zusammenhang mit der Position aufweist.

Prinzipiell kann der Magnet bei der erfindungsgemäßen Sensoranordnung auf verschiedenste Arten realisiert sein. Denkbar wäre die Verwendung eines Elektromagneten, der von einem Gleichstrom durchflossen ist. Auf diese Weise kann das Magnetfeld an verschiedene äußere Gegebenheiten angepasst werden, beispielsweise besondere Einbausituationen. Auch ein gepulster Betrieb des Elektromagneten wäre denkbar, um die Stromaufnahme zu senken. Denkbar wäre auch, dass der Elektromagnet mit einem Wechselstrom betrieben wird und dadurch ein Wechselfeld in den stabförmigen Körper eingekoppelt wird. In diesem Fall könnte das Messsignal mit dem Strom durch die Magnetspule synchronisiert werden, um die wechselnde Amplitude auswerten zu können (beispielsweise über eine Synchronmodulation oder Lock-In-Technik). Auf diese Weise kann auf Einbausituationen mit hohen elektromagnetischen Störungen eingegangen werden.

Gemäß einer besonders bevorzugten Ausgestaltung ist der Magnet jedoch durch einen Permanentmagneten gebildet. Diese Ausgestaltung hat den Vorteil, dass der Stromverbrauch gegenüber der Verwendung eines Elektromagneten deutlich reduziert ist. Gleichzeitig muss zum dem Magneten keine Stromversorgung bereitgestellt sein, was beispielsweise bei einem beweglich angeordneten Magneten nicht immer möglich wäre.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine schematische Darstellung von wesentlichen Elementen einer erfindungsgemäßen Sensoranordnung zur Erläuterung des Funktionsprinzips, wobei der Magnet mit dem stabförmigen Körper verbunden ist,
- Fig. 2: eine schematische Darstellung einer erfindungsgemäßen Sensoranordnung ähnlich der nach Fig. 1, wobei der Magnet durch einen ringförmigen Magneten gebildet ist, der ein Luftspalt zum stabförmigen Körper aufweist,
- Fig. 3: ein erstes Ausführungsbeispiel einer erfindungsgemäßen Sensoranordnung mit einem stabförmigen Körper, der in ein Rohr eintaucht,
- Fig. 4: ein zweites Ausführungsbeispiel einer erfindungsgemäßen Sensoranordnung, die als Kolbenpositionssensor ausgebildet ist,
- Fig. 5: eine schematische Darstellung einer erfindungsgemäßen Sensoranordnung, bei dem der Magnetfeldsensor mit dem stabförmigen Körper verbunden ist,
- Fig. 6: ein Diagramm zur Darstellung des Zusammenhangs zwischen Magnetfeldstärke und der Permeabilität einer weichmagnetischen Folie,
- Fig. 7: ein Diagramm mit der Magnetfeldstärke, die an einer Längsseite des stabförmigen Körpers austritt, in Abhängigkeit des Abstandes von dem Magneten,
- Fig. 8: eine kombinierte Darstellung zur Herleitung der Kennlinie einer erfindungsgemäßen Sensoranordnung und
- Fig. 9: ein Diagramm einer gemessenen Kennlinie einer erfindungsgemäßen Sensoranordnung, die den Zusammenhang zwischen Induktivität der Sensorspule und der Position eines Messobjekts wiedergibt.

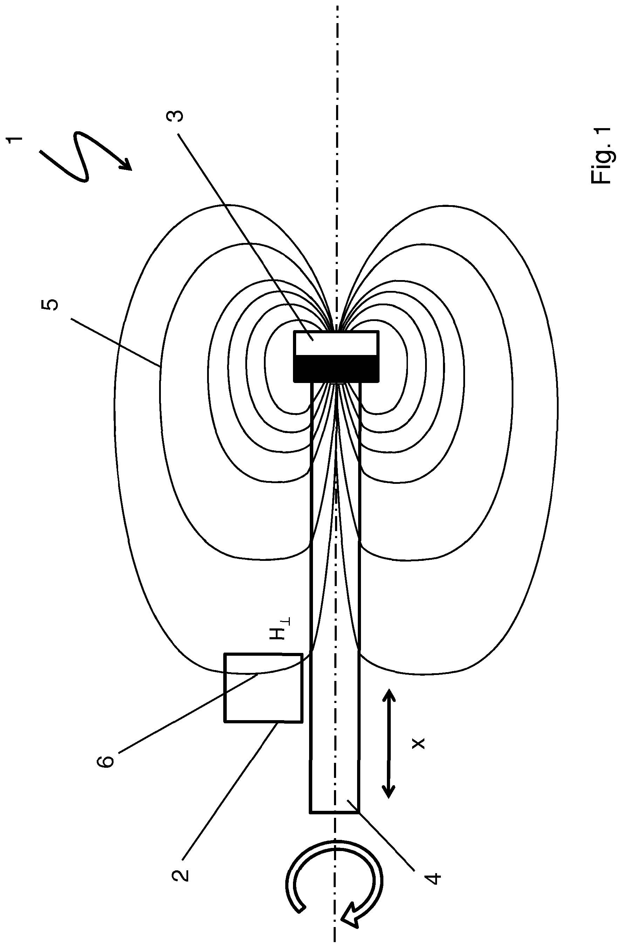

Fig. 1 zeigt eine schematische Darstellung einer erfindungsgemäßen Sensoranordnung 1, anhand derer das Funktionsprinzip der Sensoranordnung näher erläutert werden soll. Die Sensoranordnung 1 umfasst einen Magnetfeldsensor 2, einen Magneten 3 und einen stabförmigen Körper 4. Der Magnet 3 ist an der Stirnseite des stabförmigen Körpers 4 angebracht, wobei der Magnet 3 mit dem stabförmigen Körper 4 verklebt ist. Der Magnetfeldsensor 2 ist an einer Längsseite des stabförmigen Körpers 4 angeordnet, wobei der Magnetfeldsensor 2 zwar recht nahe an der Oberfläche des stabförmigen Körper aber dennoch mit einem gewissen Abstand dazu angeordnet ist. Magnet 3 und stabförmiger Körper 4 können sich gemeinsam relativ zu den Magnetfeldsensor 2 in einer Bewegungsrichtung x bewegen, die in Fig. 1 durch einen Doppelpfeil angedeutet ist. Wie in Fig. 1 zu erkennen ist, ist der stabförmige Körper parallel zu dieser Bewegungsrichtung x angeordnet. In dem dargestellten Beispiel der Sensoranordnung ist der stabförmige Körper 4 zusammen mit dem Magneten 3 rotationssymmetrisch ausgebildet und drehbar. Auch wenn dies eine bevorzugte Ausgestaltung darstellt, so müssen diese Eigenschaften nicht zwangsläufig vorliegen.

Der stabförmige Körper 4 besteht aus einem ferromagnetischen Material. Der Magnet 3 erzeugt ein Magnetfeld 5, das entlang des stabförmigen Körpers 4 geführt wird und den stabförmigen Körper 4 an dessen Längsseite wieder verlässt. Die Feldstärke des Anteils des Magnetfelds ist dabei von dem Abstand zum Magneten 3 abhängig, was in Fig. 1 durch eine abnehmende Dichte von Magnetfeldlinien angedeutet ist. Der Magnetfeldsensor 2 misst eben diesen Anteil des Magnetfelds. Da die Feldstärke in Abhängigkeit des Abstands zum Magneten 3 abnimmt, kann der Magnetfeldsensor 2 ein Messsignal erzeugen, das für den Abstand zwischen Magnetfeldsensor 2 und Magnet 3 repräsentativ ist. Daraus kann eine Position eines nicht eingezeichneten Messobjekts bestimmt werden, das beispielsweise an der in Fig. 1 linken Stirnseite des stabförmigen Körpers angebracht ist.

Der Magnetfeldsensor 2 enthält eine weichmagnetische Folie, deren magnetischen Eigenschaften (insbesondere deren Permeabilität) durch das am stabförmigen Körper 4 austretende Magnetfeld beeinflusst wird. Die Änderung der magnetischen Eigenschaften entlang der Folie wird mittels einer (oder mehrerer) Spulen des Sensors erfasst und vom Sensor als Messsignal ausgegeben. Der Magnetfeldsensor 2 ist so angebracht, dass im Wesentlichen die zur Bewegungsrichtung (bzw. Richtung des stabförmigen Körpers) senkrechte Komponente 6 des Magnetfelds 5 erfasst wird. Dies wird dadurch erreicht, dass die weichmagnetische Folie des Magnetfeldsensors 2 annähernd senkrecht zur Bewegungsrichtung x orientiert ist.

Der stabförmige Körper hat dabei den Effekt, dass gegenüber dem bisher bekannten Magnetfeldsensor durch die Führung des Magnetfeldes entlang des stabförmigen Körpers ein deutlich größerer Messbereich erzielt wird (Faktor 4-5). Ein weiterer wesentlicher Vorteil dieser Anordnung ist, dass in der Kombination aus Magnet und dem Magnetfeldsensor mit weichmagnetischer Folie eine Linearisierung der Kennlinie erreicht wird.

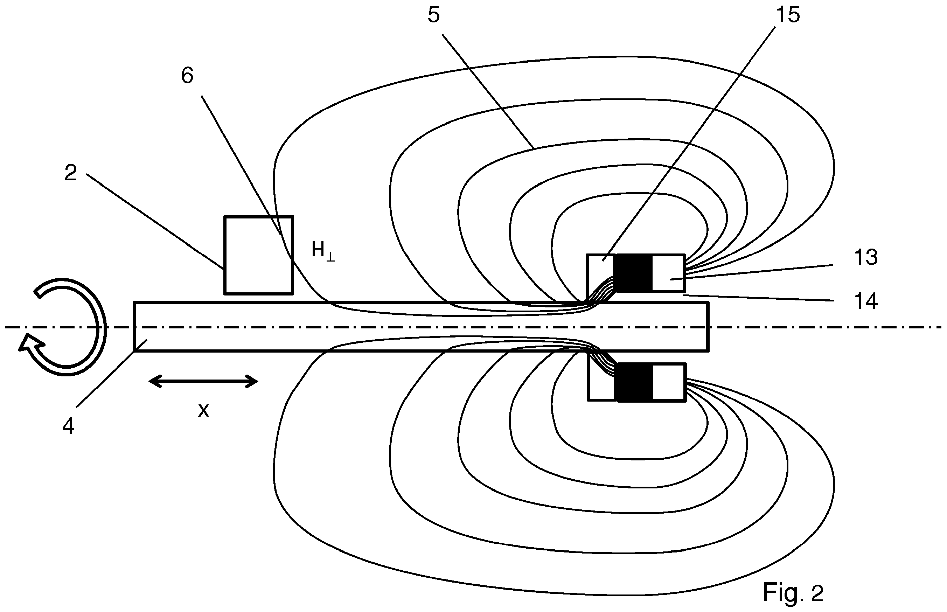

Eine ähnliche schematische Darstellung ist in Fig. 2 dargestellt, wobei hier ein ringförmiger Magnet 13 Verwendung findet. Die Sensoranordnung umfasst neben dem ringförmigen Magneten 13 wiederum einen Magnetfeldsensor 2 und einen stabförmigen Körper 4. Zwischen dem ringförmigen Magneten 13 und dem stabförmigen Körper 4 ist ein Luftspalt 14 ausgebildet. Luftspalt bedeutet ein relativ beliebiges Medium, das nichtferromagnetisch ist. Das Medium kann neben Luft aus den verschiedensten gasförmigen oder festen Stoffen gebildet sein. In dem Ausführungsbeispiel nach Fig. 2 sei der Luftspalt 14 ein Klebespalt. An einer Stirnseite des ringförmigen Magneten ist ein ringförmiger Leitkörper 15 aus einem ferromagnetischen Material angeordnet. Die Nord-Süd-Richtung des ringförmigen Magneten 13 ist parallel zu dem Ring, also parallel zur Bewegungsrichtung x ausgerichtet. Durch den Luftspalt 14 werden die Magnetfeldlinien über den Leitkörper 15 in den stabförmigen Körper 4 geleitet. Der Innendurchmesser des Leitkörpers 15 ist kleiner als der des Magneten 13, d.h. die Innenfläche des Leitkörpers 15 ist näher am stabförmigen Körper 4 als der die Innenfläche des Magneten 13. Dadurch wird die gewünschte Einleitung der Magnetfelder in den stabförmigen Körper erzielt. Durch die geschickte Anordnung des Magneten 13, der Größe des Luftspaltes 14 und mit der Verwendung von ferromagnetischen Leitkörpern 15 kann der Magnetfluss je nach Anforderungen in geeigneter Weise gelenkt werden. Die senkrechte Komponente H_{⊥}, des Magnetfeldes 6 wird vom Magnetfeldsensor 2 gemessen.

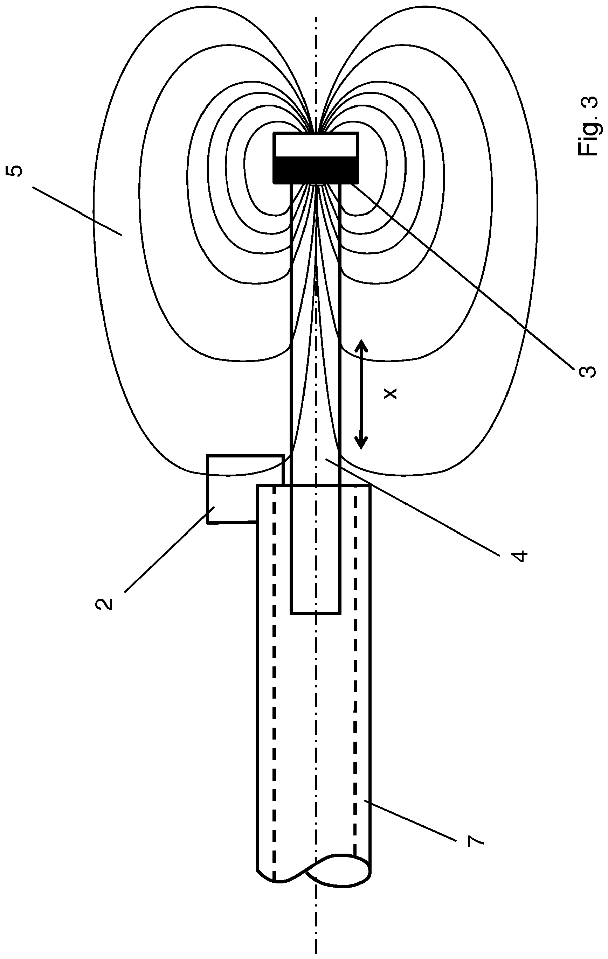

Das zuvor beschriebene Grundprinzip ist in einem ersten Ausführungsbeispiels einer erfindungsgemäßen Sensoranordnung in Fig. 3 verwendet. Ein Magnet 3 ist an einem stabförmigen Körper 4 angebracht. Der stabförmige Körper 4 taucht in ein Rohr 7 ein, wobei die Achse des Rohres 7 mit der Achse des stabförmigen Körpers 4 zusammenfällt. Ein Magnetfeldsensor 2 ist an einer Wandung des Rohres 7 angebracht, in das der stabförmige Körper 4 eintaucht. Aus dem Messsignal des Magnetfeldsensors kann die Position des Magneten in Form der Eintauchtiefe des stabförmigen Körper bestimmt werden. In diesem Fall stellt der stabförmige Körper selbst das Messobjekt dar, dessen Eintauchtiefe in das Rohr gemessen werden soll.

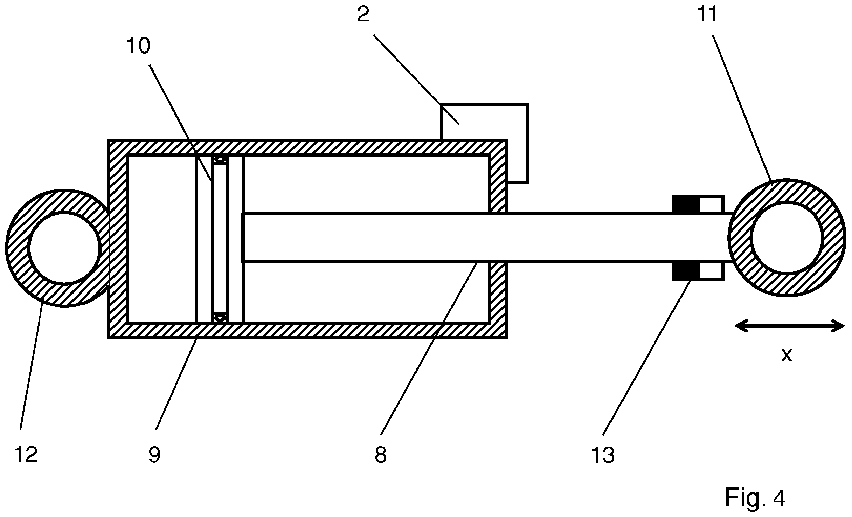

In Fig. 4 ist ein zweites Ausführungsbeispiel einer erfindungsgemäßen Sensoranordnung dargestellt, wobei die Sensoranordnung hier als Kolbenpositionssensor ausgebildet ist. Der stabförmige Körper ist durch eine Kolbenstange 8 gebildet, die durch eine Öffnung in einen Hydraulikzylinder 9 führt. An der einen Stirnseite der Kolbenstange 8 (in Fig. 4: links) ist ein Kolben 10 angeordnet, an der anderen Stirnseite (in Fig. 4: rechts) ist eine Öse 11 angebracht. Eine weitere Öse 12 ist an der Seite des Hydraulikzylinders 9 angebracht, die der Öffnung für die Kolbenstange abgewandt ist. Über die beiden Ösen 11 und 12 können Maschinenelemente verbunden werden, die über den Hydraulikzylinder bewegt werden sollen.

Ein ringförmiger Magnet 13 ist im Endbereich der Kolbenstange 8 an der dem Kolben abgewandten Seite der Kolbenstange angeordnet. Der Innendurchmesser des ringförmigen Magneten 13 ist dabei geringfügig größer als der Außendurchmesser der Kolbenstange 8, wodurch ein Luftspalt entsteht und der Magnet 13 mit einem Klebstoff fest mit der Kolbenstange 8 verbunden werden kann. Ein Magnetfeldsensor 2 ist an dem Hydraulikzylinder 9 fest angebracht, wodurch der Abstand zwischen Magnetfeldsensor 2 und Magnet 13 bestimmt werden kann. Da die Bewegung des Kolbens 10 - in diesem Fall das Messobjekt - mit der Bewegung des Magneten 13 über die Kolbenstange 8 gekoppelt ist, bewegt sich der Magnet 13 mit der Kolbenstange 8 und dem Kolben 10, womit die Position des Kolbens 10 in x-Richtung aus dem Abstand zwischen Magnet 13 und Magnetfeldsensor 2 bestimmt werden kann. Dieses Beispiel kann auf eine Vielzahl von Aktuatoren angewendet werden, z.B. auch Pneumatikzylinder, oder elektrische Stellantriebe.

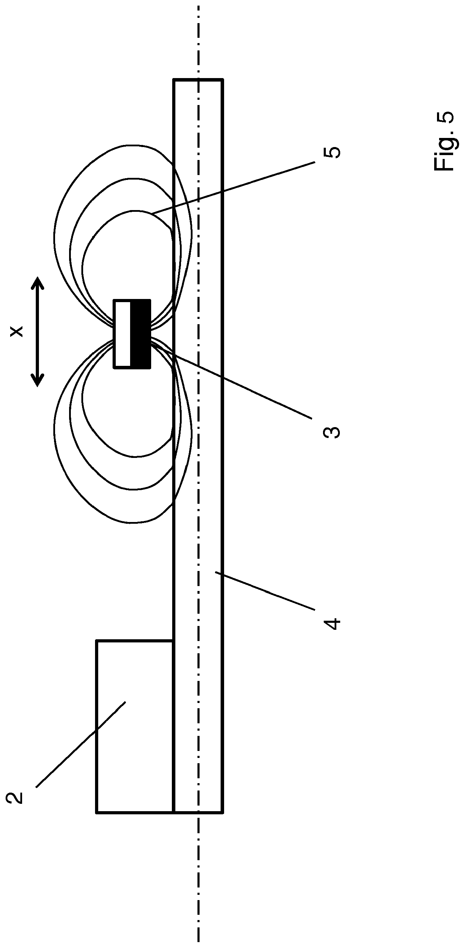

In den vorhergehenden Figuren ist der Magnet mit dem stabförmigen Körper verbunden. Fig. 5 zeigt ein anderes Ausführungsbeispiel, bei dem der Magnetfeldsensor 2 mit der stabförmigen Körper 4 verbunden ist und sich der Magnet relativ zu dem Magnetfeldsensor 2 und dem stabförmigen Körper 4 bewegen kann. Der Magnet 3 ist mit einem (nicht eingezeichneten) Messobjekt verbunden. Der stabförmige Körper 4 ist in dem Einflussbereich des Magneten 2 angeordnet, so dass das Magnetfeld des Magneten 2 zumindest teilweise in den stabförmigen Körper 4 eindringt. Wiederum führt der stabförmige Körper 4 das Magnetfeld zu dem fest mit ihm verbundenen Magnetfeldsensor 2. Das Messprinzip ist dabei das gleiche wie bei den zuvor erläuterten Figuren.

Dieses Beispiel kann vielfältige Anwendung finden, beispielsweise bei einem beweglichen Teil einer Maschine, der sich gegenüber dem Maschinenrahmen bewegt. Am beweglichen Teil der Maschine ist ein Magnet 3 angebracht, während der Magnetfeldsensor am Maschinenrahmen befestigt ist. Gemessen wird dann die Relativbewegung der beiden Teile zueinander, woraus auf die Position oder Positionsänderung des beweglichen Teils relativ zum Maschinenrahmen geschlossen werden kann. Hier gibt es verschiedenste Anwendungen, bei denen zwei Objekte sich gegeneinander bewegen, deren relative Position gemessen werden soll.

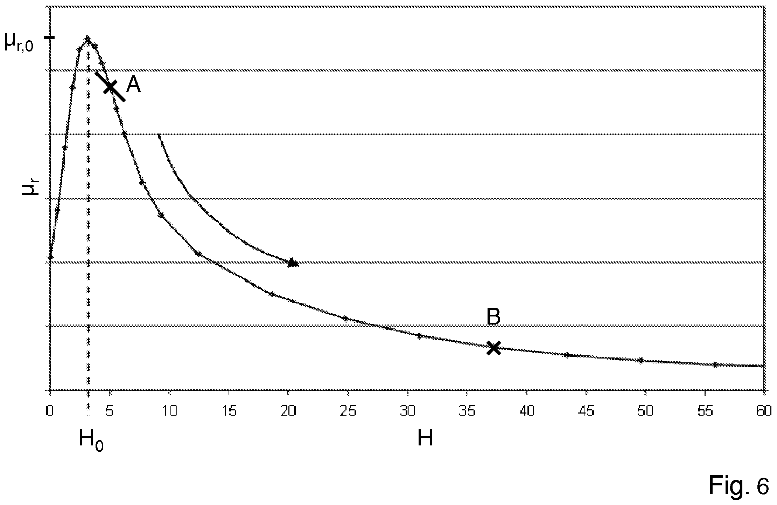

Anhand der Fig. 6 bis 9 soll nachfolgend die Kennlinie einer derartigen Sensoranordnung 1 näher betrachtet werden. Dabei kommt ein Magnetfeldsensor mit einer weichmagnetischen Folie zum Einsatz. Die Abhängigkeit der relativen Permeabilität µᵣ der weichmagnetischen Folie von der auf sie einwirkenden Feldstärke H ist in Fig. 6 dargestellt. Ohne äußeres Magnetfeld hat die relative Permeabilität einen Startwert, der sich bis zu einer Feldstärke Ho auf einen Wert µ_{r,0} erhöht. Danach fällt die Permeabilität mit steigender Feldstärke nichtlinear ab. Wenn die weichmagnetische Folie in einem Magnetfeldsensor eingesetzt ist, wird der Arbeitsbereich in die fallende Flanke der Kennlinie gelegt. Denkbar wäre der Bereich zwischen den Punkten A und B der Kennlinie.

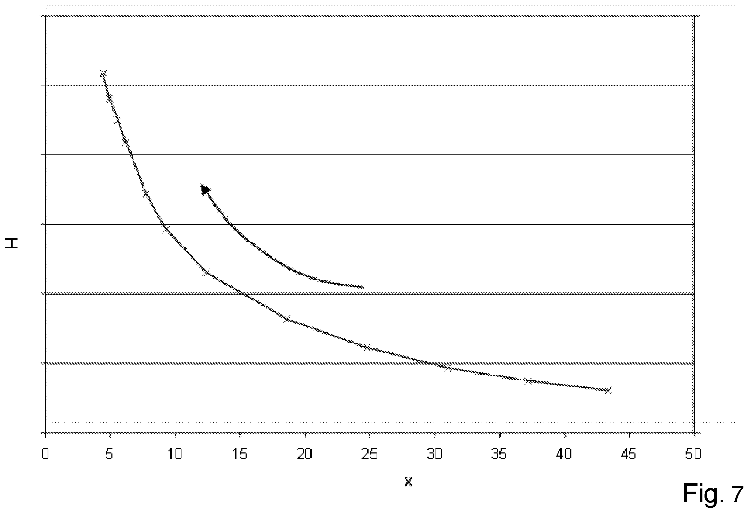

Fig. 7 zeigt ein Diagramm mit der Abhängigkeit der Feldstärke H entlang des stabförmigen Körpers 2 nahe dessen Oberfläche, wobei der stabförmigen Körper 2 entweder mit dem Magnet fest verbunden ist (entsprechend Fig. 1 oder 2) oder der stabförmige Körper mit dem Magnetfeldsensor fest verbunden ist (entsprechend Fig. 5). Durch Anordnung der weichmagnetischen Folie des Magnetfeldsensors senkrecht zur Bewegungsrichtung und nahe der Oberfläche des stabförmigen Körpers (beispielsweise bis zu wenigen Millimeter von der Oberfläche entfernt) wird im Wesentlichen die senkrecht austretende Komponente H_{⊥} des Magnetfeldes gemessen. Es ist zu erkennen, dass mit zunehmendem Abstand zum Magneten die an der Oberfläche des stabförmigen Körpers detektierbare Feldstärke H nichtlinear abnimmt.

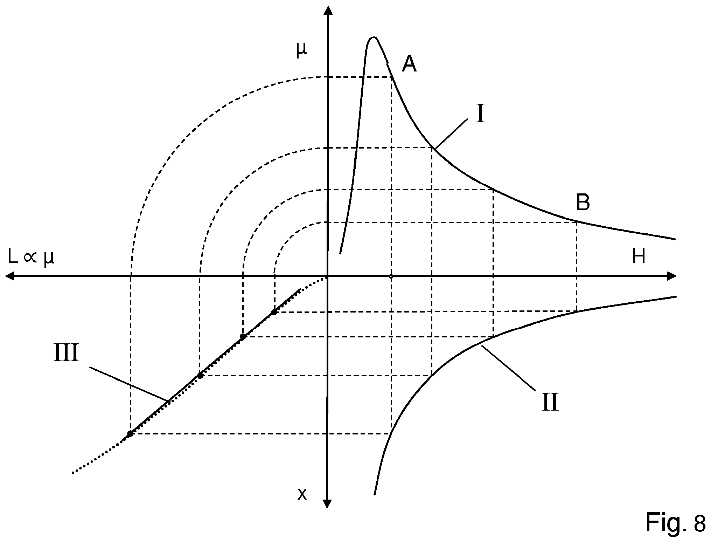

In Fig. 8 werden diese beiden Zusammenhänge kombiniert dargestellt und daraus die Kennlinie des Sensors hergeleitet. In Bereich I des Diagramms (rechtes oberes Feld) ist die Abhängigkeit der relativen Permeabilität µᵣ von der Feldstärke H dargestellt. Genutzt wird der fallende Bereich der Kennlinie zwischen den Punkten A und B. Bereich II (rechtes unteres Feld) zeigt die Abhängigkeit der Feldstärke (senkrechte Komponente) von der Position x. Die Position x bezeichnet den Abstand des am stabförmigen Körper angebrachten Magneten vom Magnetfeldsensor. Bereich III (linkes unteres Feld) zeigt schließlich die grafische Darstellung der Kennlinie, nämlich die Induktivität der Messspule des Magnetfeldsensors (die wiederum proportional zur Permeabilität ist). Die Kennlinie ist nahezu linear in Abhängigkeit von der Position x. Damit steht ein Messsignal zur Verfügung, das ohne aufwändige Linearisierung eine linearen Zusammenhang mit der Position x aufweist.

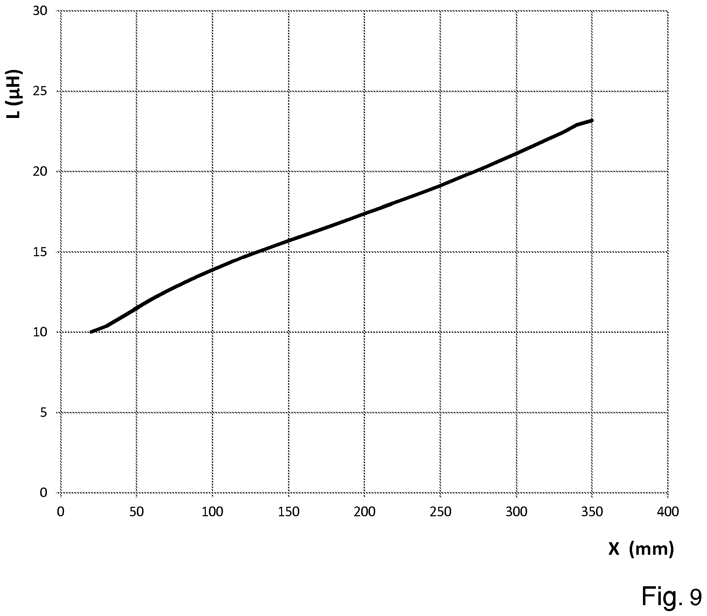

Fig. 9 zeigt eine gemessene Kennlinie der Induktivität L eines Sensorspule als Funktion der Position x für ein konkretes Ausführungsbeispiel gemäß Fig. 1. Der stabförmige Körper ist durch eine Kolbenstange mit Durchmesser D = 20 mm aus den ferromagnetischem Stahl 20MnV6 gebildet. Der ringförmige Magnet aus NeFe13 mit Außendurchmesser Dₐ = 20 mm, Innendurchmesser Dᵢ = 14 mm und einer Höhe von 10 mm, der längs der Mittelachse polarisiert ist (d.h. die Nord-Süd-Richtung des Magneten ist parallel zu der Kolbenstange), ist an der Stirnseite der Kolbenstange platziert. Das Messelement des Magnetfeldsensors besteht aus einer weichmagnetischen Folie aus Vitrovac und einer Planarspule mit Abmessungen 10x15 mm, die direkt auf die Folie geklebt ist. Gemessen wurde die Induktivität der Spule mit einer Messbrücke, wobei die Kolbenstange mit dem Magneten über einen Bereich von 325 mm in x-Richtung verschoben wurde. Es ist deutlich in Fig. 9 zu erkennen, dass der annähernd lineare Zusammenhang zwischen Induktivität und der Position messtechnisch belegt werden konnte. Damit kann ein Messsignal gewonnen werden, das linear von der Position eines Messobjekts abhängt.

Hinsichtlich weiterer vorteilhafter Ausgestaltungen der erfindungsgemäßen Sensoranordnung wird zur Vermeidung von Wiederholungen auf den allgemeinen Teil der Beschreibung sowie auf die beigefügten Ansprüche verwiesen. Schließlich sei ausdrücklich darauf hingewiesen, dass die voranstehend beschriebenen Ausführungsbeispiele der erfindungsgemäßen Sensoranordnung lediglich zur Erörterung der beanspruchten Lehre dienen, diese jedoch nicht auf die Ausführungsbeispiele einschränken.

### Bezugszeichenliste

- 1: Sensoranordnung
- 2: Magnetfeldsensor
- 3: Magnet
- 4: stabförmiger Körper
- 5: Feldlinien
- 6: senkrechte Komponente des Magnetfelds
- 7: Rohr
- 8: Kolbenstange
- 9: Hydraulikzylinder
- 10: Kolben
- 11: Öse
- 12: Öse
- 13: ringförmiger Magnet
- 14: Luftspalt
- 15: Leitkörper

## Patentansprüche

1. Sensoranordnung zum Bestimmen einer Position und/oder einer Positionsänderung eines Messobjekts, wobei die Sensoranordnung (1) genau einen Magneten (3), einen stabförmigen Körper (4) und einen Magnetfeldsensor (2) aufweist, wobei der Magnet (3) und der Magnetfeldsensor (2) relativ zueinander in einer Bewegungsrichtung x bewegbar sind, wobei der Magnet (3) ein Magnetfeld (5) erzeugt, wobei Bewegungen des Magneten (3) und des Messobjekts oder Bewegungen des Magnetfeldsensors (2) und des Messobjekts gekoppelt sind, wobei der stabförmiger Körper (4) aus einem ferromagnetischen Material gebildet ist und in Längsrichtung eine deutlich größere Abmessung hat als in Querrichtung, wobei eine Relativbewegung zwischen dem stabförmigen Körper (4) und dem Magneten (3) nicht stattfindet, wobei nämlich der stabförmige Körper (4) mit dem Magneten (3) verbunden sein kann, wobei der stabförmige Körper (4) das Magnetfeld des Magneten (3) zumindest teilweise in Richtung des Magnetfeldsensors (2) lenkt, wobei ein Teil des Magnetfelds den stabförmigen Köper (4) an dessen Längsseite verlässt, wodurch an einer Oberfläche des stabförmigen Körpers (4) ein Magnetfeld detektierbar ist, dessen Feldstärke mit zunehmendem Abstand von dem Magneten (3) abnimmt, wobei der stabförmige Körper (4) parallel zu der Bewegungsrichtung x angeordnet ist,
wobei der Magnetfeldsensor (2) an einer Längsseite des stabförmigen Körpers (4) angeordnet ist und zum Erzeugen eines Messsignals aus einem Anteil des Magnetfelds (6), das an einer der Längsseiten des stabförmigen Körpers bei dem Magnetfeldsensor (2) aus dem stabförmigen Körper (4) austritt, ausgestaltet ist, wodurch aus dem Messsignal die Position und/oder Positionsänderung des Messobjekts bestimmbar ist,
wobei Magnet (3) und stabförmiger Körper (4) derart aufeinander abgestimmt sind, dass der Magnet (3) entlang des Körpers eine nicht-lineare Magnetfeldverteilung einprägt, wobei der Magnetfeldsensor (2) eine nicht-lineare Kennlinie aufweist und wobei die nicht-lineare Magnetfeldverteilung entlang des stabförmigen Körpers (4) und die nicht-lineare Kennlinie des Magnetfeldsensors (2) derart aufeinander abgestimmt sind, dass ein Messsignal des Magnetfeldsensors (2) eine annähernd lineare Kennlinie für die zu bestimmende Position und/oder Positionsänderung aufweist.

2. Sensoranordnung nach Anspruch 1, **dadurch gekennzeichnet, dass** der Magnet (3) mit dem stabförmigen Körper (4) verbunden ist, so dass vorzugsweise Magnet (3) und stabförmiger Körper (4) gemeinsam relativ zu dem Magnetfeldsensor (2) bewegbar sind.

3. Sensoranordnung nach Anspruch 2, **dadurch gekennzeichnet, dass** der Magnet (3) an einer Stirnseite des stabförmigen Körpers (4) angeordnet ist und dass die Nord-Süd-Richtung des Magneten (3) parallel zu der Bewegungsrichtung x ausgerichtet ist oder
dass der Magnet (3) an einer Längsseite des stabförmigen Körpers (4) angeordnet ist und dass die Nord-Süd-Richtung des Magneten (3) senkrecht zur der Bewegungsrichtung x ausgerichtet ist.

4. Sensoranordnung nach Anspruch 1 oder 2, **dadurch gekennzeichnet, dass** der Magnet (3) als ringförmiger Magnet (13) ausgebildet ist, wobei der Magnet (13) um den stabförmigen Körper herum angeordnet ist, und dass die Nord-Süd-Richtung des Magneten (13) parallel zur der Bewegungsrichtung x ausgerichtet ist.

5. Sensoranordnung nach einem der Ansprüche 1 bis 4, **dadurch gekennzeichnet, dass** zwischen stabförmigen Körper (4) und Magneten (3, 13) ein Luftspalt (14) ausgebildet ist.

6. Sensoranordnung nach einem der Ansprüche 1 bis 5, **dadurch gekennzeichnet, dass** die Kopplung der Bewegungen des Messobjekts und des Magneten (3) dadurch erreicht ist, dass Messobjekt und Magnet (3), gegebenenfalls über den stabförmigen Körper (4), miteinander verbunden sind.

7. Sensoranordnung nach einem der Ansprüche 1 bis 5, **dadurch gekennzeichnet, dass** die Kopplung der Bewegungen des Messobjekts und des Magnetfeldsensors (2) dadurch erreicht ist, dass Messobjekt und Magnetfeldsensor (2), gegebenenfalls über den stabförmigen Körper (4), miteinander verbunden sind.

8. Sensoranordnung nach einem der Ansprüche 1 bis 7, **dadurch gekennzeichnet, dass** der stabförmige Körper (4) in ein Rohr (7) eintaucht und dass der Magnetfeldsensor (2) an einer Wandung des Rohres (7) angebracht ist, oder
dass der stabförmige Körper (4) durch eine Kolbenstange (8) gebildet ist, die mit einem in einem Zylinder (9) angeordneten Kolben (10) verbunden ist, und dass der Magnetfeldsensor (2) an einer Wandung des Zylinders (9) angebracht ist.

9. Sensoranordnung nach einem der Ansprüche 1 bis 8, **dadurch gekennzeichnet, dass** der Magnetfeldsensor (2) eine Spule und eine im Einflussbereich der Spule angeordnete weichmagnetische Folie aufweist, wobei die weichmagnetische Folie vorzugsweise senkrecht zu der Bewegungsrichtung x angeordnet ist, wobei die Permeabilität der weichmagnetischen Folie unter Einfluss des von dem Magneten (3) erzeugten Magnetfelds eine Änderung erfährt, wobei die Änderung der Permeabilität zu einer Änderung der Induktivität der Spule führt und wobei aus der Änderung der Induktivität ein Messsignal erzeugbar ist.

10. Sensoranordnung nach Anspruch 9, **dadurch gekennzeichnet, dass** die Spule in einer ersten Ebene und die weichmagnetische Folie in einer zweiten Ebene angeordnet ist, wobei die erste Ebene vorzugsweise parallel zur zweiten Ebene angeordnet ist.

11. Sensoranordnung nach einem der Ansprüche 1 bis 10, **dadurch gekennzeichnet, dass** der Magnet (3) durch einen Elektromagneten oder einen Permanentmagneten gebildet ist.

12. Verfahren zum Bestimmen einer Position und/oder einer Positionsänderung eines Messobjekts, insbesondere unter Verwendung einer Sensoranordnung nach einem der Ansprüche 1 bis 11, mit den Schritten:
Einprägen eines Magnetfelds in einem stabförmigen Körper (4) aus einem ferromagnetischen Material mittels genau eines Magneten (3), wobei das Magnetfeld durch den stabförmigen Körper (4) zumindest teilweise in Richtung eines Magnetfeldsensors (2) gelenkt wird, wobei ein Teil des Magnetfelds den stabförmigen Köper (4) an dessen Längsseite verlässt, wodurch an einer Oberfläche des stabförmigen Körpers (4) ein Magnetfeld detektierbar ist, dessen Feldstärke mit zunehmendem Abstand von dem Magneten (3) abnimmt, und wobei der stabförmige Körper (4) parallel zu einer Bewegungsrichtung x angeordnet ist, in der der Magnetfeldsensor (2) und/oder der Magnet (3) relativ zueinander bewegbar sind,
Detektieren eines an einer Längsseite des stabförmigen Körpers (4) austretenden Magnetfelds (6) mittels des Magnetfeldsensors (2) zum Erzeugen eines Messsignals und
Bestimmen einer Position und/oder einer Positionsänderung des Messobjekts aus dem Messsignal,
wobei der Körper (4) in Längsrichtung eine deutlich größere Abmessung hat als in Querrichtung und wobei eine Relativbewegung zwischen dem Körper (4) und dem Magneten (3) nicht stattfindet, wobei nämlich der stabförmige Körper (4) mit dem Magneten verbunden sein kann,
wobei Magnet (3) und stabförmiger Körper (4) derart aufeinander abgestimmt sind, dass der Magnet (3) entlang des Körpers eine nicht-lineare Magnetfeldverteilung einprägt, wobei der Magnetfeldsensor (2) eine nicht-lineare Kennlinie aufweist und wobei die nicht-lineare Magnetfeldverteilung entlang des stabförmigen Körpers (4) und die nicht-lineare Kennlinie des Magnetfeldsensors (2) derart aufeinander abgestimmt sind, dass ein Messsignal des Magnetfeldsensors (2) eine annähernd lineare Kennlinie für die zu bestimmende Position und/oder Positionsänderung aufweist.

## Claims

1. Sensor arrangement for determining a position and/or a position change of a measurement object, wherein the sensor arrangement (1) has precisely one magnet (3), a rod-like member (4) and a magnetic field sensor (2), wherein the magnet (3) and the magnetic field sensor (2) can be moved relative to each other in a movement direction x, wherein the magnet (3) generates a magnetic field (5), wherein movements of the magnet (3) and the measurement object or movements of the magnetic field sensor (2) and the measurement object are coupled, wherein the rod-like member (4) is formed from a ferromagnetic material and has a significantly larger dimension in the longitudinal direction than in the transverse direction, wherein a relative movement between the rod-like member (4) and the magnet (3) does not take place, wherein the rod-like member (4) can actually be connected to the magnet (3), wherein the rod-like member (4) directs the magnetic field of the magnet (3) at least partially in the direction of the magnetic field sensor (2), wherein a portion of the magnetic field leaves the rod-like member (4) at the longitudinal side thereof, whereby there can be detected at a surface of the rod-like member (4) a magnetic field whose field strength decreases with increasing spacing from the magnet (3), wherein the rod-like member (4) is arranged parallel with the movement direction x,
wherein the magnetic field sensor (2) is arranged at a longitudinal side of the rod-like member (4) and in order to produce a measurement signal is configured from a portion of the magnetic field (6) which is discharged from the rod-like member (4) at one of the longitudinal sides of the rod-like member in the magnetic field sensor (2), whereby the position and/or position change of the measurement object can be determined from the measurement signal,
wherein the magnet (3) and rod-like member (4) are adapted to each other in such a manner that the magnet (3) imparts a non-linear magnetic field distribution along the member, wherein the magnetic field sensor (2) has a non-linear characteristic line and wherein the non-linear magnetic field distribution along the rod-like member (4) and the non-linear characteristic line of the magnetic field sensor (2) are adapted to each other in such a manner that a measurement signal of the magnetic field sensor (2) has a substantially linear characteristic line for the position and/or position change which is intended to be determined.

2. Sensor arrangement according to claim 1, **characterised in that** the magnet (3) is connected to the rod-like member (4) so that the magnet (3) and rod-like member (4) can preferably be moved together relative to the magnetic field sensor (2).

3. Sensor arrangement according to claim 2, **characterised in that** the magnet (3) is arranged at an end side of the rod-like member (4) and **in that** the north/south direction of the magnet (3) is orientated parallel with the movement direction x or
**in that** the magnet (3) is arranged at a longitudinal side of the rod-like member (4) and **in that** the north/south direction of the magnet (3) is orientated perpendicularly to the movement direction x.

4. Sensor arrangement according to claim 1 or 2,
**characterised in that** the magnet (3) is constructed as an annular magnet (13), wherein the magnet (13) is arranged around the rod-like member and **in that** the north/south direction of the magnet (13) is orientated parallel with the movement direction x.

5. Sensor arrangement according to any one of claims 1 to 4, **characterised in that** an air gap (14) is formed between the rod-like member (4) and magnet (3, 13).

6. Sensor arrangement according to any one of claims 1 to 5, **characterised in that** the coupling of the movements of the measurement object and the magnet (3) is achieved by the measurement object and magnet (3) being connected to each other, where applicable by means of the rod-like member (4).

7. Sensor arrangement according to any one of claims 1 to 5, **characterised in that** the coupling of the movements of the measurement object and the magnetic field sensor (2) is achieved by the measurement object and magnetic field sensor (2) being connected to each other, where applicable by means of the rod-like member (4).

8. Sensor arrangement according to any one of claims 1 to 7, **characterised in that** the rod-like member (4) is introduced into a pipe (7) and **in that** the magnetic field sensor (2) is fitted to a wall of the pipe (7), or
**in that** the rod-like member (4) is formed by means of a piston rod (8) which is connected to a piston (10) which is arranged in a cylinder (9), and **in that** the magnetic field sensor (2) is fitted to a wall of the cylinder (9).

9. Sensor arrangement according to any one of claims 1 to 8, **characterised in that** the magnetic field sensor (2) has a coil and a magnetically soft film which is arranged in the influence region of the coil, wherein the magnetically soft film is preferably arranged perpendicularly to the movement direction x, wherein the permeability of the magnetically soft film under the influence of the magnetic field generated by the magnet (3) is subjected to a change, wherein the change of the permeability leads to a change of the inductivity of the coil and wherein a measurement signal can be produced from the change of the inductivity.

10. Sensor arrangement according to claim 9, **characterised in that** the coil is arranged in a first plane and the magnetically soft film is arranged in a second plane, wherein the first plane is preferably arranged parallel with the second plane.

11. Sensor arrangement according to any one of claims 1 to 10, **characterised in that** the magnet (3) is formed by an electromagnet or a permanent magnet.

12. Method for determining a position and/or a position change of a measurement object, in particular using a sensor arrangement according to any one of claims 1 to 11, having the steps of:
imparting a magnetic field in a rod-like member (4) of a ferromagnetic material by means of precisely one magnet (3),
wherein the magnetic field is directed by the rod-like member (4) at least partially in the direction of a magnetic field sensor (2), wherein a portion of the magnetic field leaves the rod-like member (4) at the longitudinal side thereof,
whereby there can be detected at a surface of the rod-like member (4) a magnetic field whose field strength decreases with increasing spacing from the magnet (3), and wherein the rod-like member (4) is arranged parallel with a movement direction x in which the magnetic field sensor (2) and/or the magnet (3) can be moved relative to each other,
detecting a magnetic field (6) which is discharged at a longitudinal side of the rod-like member (4) by means of the magnetic field sensor (2) in order to produce a measurement signal, and
determining a position and/or a position change of the measurement object from the measurement signal,
wherein the member (4) has a significantly larger dimension in the longitudinal direction than in the transverse direction and wherein a relative movement between the member (4) and the magnet (3) does not take place, wherein the rod-like member (4) can actually be connected to the magnet,
wherein the magnet (3) and rod-like member (4) are adapted to each other in such a manner that the magnet (3) imparts a non-linear magnetic field distribution along the member,
wherein the magnetic field sensor (2) has a non-linear characteristic line and wherein the non-linear magnetic field distribution along the rod-like member (4) and the non-linear characteristic line of the magnetic field sensor (2) are adapted to each other in such a manner that a measurement signal of the magnetic field sensor (2) has a substantially linear characteristic line for the position and/or position change which is intended to be determined.

## Revendications

1. Disposition de capteur pour la détermination d'une position et/ou d'un changement de position d'un objet mesuré, dans lequel la disposition de capteur (1) comprend exactement un aimant (3), un corps en forme de tige (4) et un détecteur de champ magnétique (2), dans lequel l'aimant (3) et le détecteur de champ magnétique (2) sont mobiles l'un par rapport à l'autre dans une direction de déplacement x, dans lequel l'aimant (3) génère un champ magnétique (5), dans lequel les déplacements de l'aimant (3) et de l'objet mesuré ou les déplacements du détecteur de champ magnétique (2) et de l'objet mesuré sont couplés, dans lequel le corps en forme de tige (4) est constitué d'un matériau ferromagnétique et présente, dans la direction longitudinale, une dimension nettement supérieure à une dimension dans la direction transversale, dans lequel un déplacement relatif entre le corps en forme de tige (4) et l'aimant (3) n'a pas lieu, dans lequel le corps en forme de tige (4) peut être relié avec l'aimant (3), dans lequel le corps en forme de tige (4) dévie le champ magnétique de l'aimant (3) au moins partiellement dans la direction du détecteur de champ magnétique (2), dans lequel une partie du champ magnétique quitte le corps en forme de tige (4) au niveau de son côté longitudinal, ce qui permet de détecter, au niveau d'une surface du corps en forme de tige (4), un champ magnétique dont l'intensité diminue lorsque la distance par rapport à l'aimant (3) augmente, dans lequel le corps en forme de tige (4) est disposé parallèlement à la direction de déplacement x,
dans lequel le détecteur de champ magnétique (2) est disposé sur un côté longitudinal du corps en forme de tige (4) et est conçu pour générer un signal de mesure à partir d'une part du champ magnétique (6) qui sort du corps en forme de tige (4) sur un des côtés longitudinaux du corps en forme de tige au niveau du détecteur de champ magnétique (2), ce qui permet de déterminer, à partir du signal de mesure, la position et/ou le changement de position de l'objet mesuré,
dans lequel l'aimant (3) et le corps en forme de tige (4) sont adaptés l'un à l'autre de façon à ce que l'aimant (3) impose, le long du corps, une répartition non linéaire du champ magnétique, dans lequel le détecteur de champ magnétique (2) présente une courbe caractéristique non linéaire et dans lequel la répartition non linéaire du champ magnétique le long du corps en forme de tige (4) et la courbe caractéristique non linéaire du détecteur de champ magnétique (2) sont adaptées l'une à l'autre de façon à ce qu'un signal de mesure du détecteur de champ magnétique (2) présente une courbe caractéristique approximativement linéaire pour la position et/ou le changement de position à déterminer.

2. Disposition de capteur selon la revendication 1, **caractérisée en ce que** l'aimant (3) est relié avec le corps en forme de tige (4) de façon à ce que, de préférence, l'aimant (3) et le corps en forme de tige (4) soient mobiles ensemble par rapport au détecteur de champ magnétique (2).

3. Disposition de capteur selon la revendication 2, **caractérisée en ce que** l'aimant (3) est disposé au niveau d'une face frontale du corps en forme de tige (4) et **en ce que** la direction nord-sud de l'aimant (3) est orientée parallèlement à la direction de déplacement x ou
**en ce que** l'aimant (3) est disposé sur un côté longitudinal du corps en forme de tige (4) et **en ce que** la direction nord-sud de l'aimant (3) est orientée perpendiculairement à la direction de déplacement x.

4. Disposition de capteur selon la revendication 1 ou 2, **caractérisée en ce que** l'aimant (3) présente la forme d'un aimant annulaire (13), dans lequel l'aimant (13) est disposé autour du corps en forme de tige et **en ce que** la direction nord-sud de l'aimant (13) est orientée parallèlement à la direction de déplacement x.

5. Disposition de capteur selon l'une des revendications 1 à 4, **caractérisée en ce qu'**un entrefer (14) est formé entre le corps en forme de tige (4) et l'aimant (3, 13).

6. Disposition de capteur selon l'une des revendications 1 à 5, **caractérisée en ce que** le couplage des déplacements de l'objet mesuré et de l'aimant (3) est obtenu grâce au fait que l'objet mesuré et l'aimant (3) sont reliés entre eux, le cas échéant par l'intermédiaire du corps en forme de tige (4).

7. Disposition de capteur selon l'une des revendications 1 à 5, **caractérisée en ce que** le couplage des déplacements de l'objet mesuré et du détecteur de champ magnétique (2) est obtenu grâce au fait que l'objet mesuré et le détecteur de champ magnétique (2) sont reliés entre eux, le cas échéant par l'intermédiaire du corps en forme de tige (4).

8. Disposition de capteur selon l'une des revendications 1 à 7, **caractérisée en ce que** le corps en forme de tige (4) plonge dans un tube (7) et **en ce que** le détecteur de champ magnétique (2) est monté sur une paroi du tube (7) ou
**en ce que** le corps en forme de tige (4) est constitué d'une tige de piston (8) qui est reliée avec un piston (10) disposé dans un cylindre (9) et **en ce que** le détecteur de champ magnétique (2) est monté sur une paroi du cylindre (9).

9. Disposition de capteur selon l'une des revendications 1 à 8, **caractérisée en ce que** le détecteur de champ magnétique (2) comprend une bobine et un film magnétique doux disposé dans la zone d'influence de la bobine, dans lequel le film magnétique doux est disposé de préférence perpendiculairement à la direction de déplacement x, dans lequel la perméabilité du film magnétique doux subit, sous l'influence du champ magnétique généré par l'aimant (3), un changement, dans lequel le changement de perméabilité conduit à un changement de l'inductance de la bobine et dans lequel un signal de mesure peut être généré à partir du changement d'inductance.

10. Disposition de capteur selon la revendication 9, **caractérisée en ce que** la bobine est disposée dans un premier plan et le film magnétique doux est disposé dans un deuxième plan, dans lequel le premier plan est disposé de préférence parallèlement au deuxième plan.

11. Disposition de capteur selon l'une des revendications 1 à 10, **caractérisée en ce que** l'aimant (3) est constitué d'un électro-aimant ou d'un aimant permanent.

12. Procédé de détermination d'une position et/ou d'un changement de position d'un objet mesuré, plus particulièrement à l'aide d'une disposition de capteur selon l'une des revendications 1 à 11, avec les étapes suivantes :
application d'un champ magnétique dans un corps en forme de tige (4) constitué d'un matériau ferromagnétique au moyen d'exactement un aimant (3), dans lequel le champ magnétique est dévié par le corps en forme de tige (4) au moins partiellement dans la direction d'un détecteur de champ magnétique (2), dans lequel une partie du champ magnétique quitte le corps en forme de tige (4) au niveau de son côté longitudinal, ce qui permet de détecter, au niveau d'une surface du corps en forme de tige (4), un champ magnétique dont l'intensité diminue lorsque la distance par rapport à l'aimant (3) augmente, dans lequel le corps en forme de tige (4) est disposé parallèlement à la direction de déplacement x et dans lequel le détecteur de champ magnétique (2) et/ou l'aimant (3) sont mobiles l'un par rapport à l'autre,
détection d'un champ magnétique (6) sortant au niveau d'un côté longitudinal du corps en forme de tige (4) au moyen du détecteur de champ magnétique (2) afin de générer un signal de mesure et
détermination d'une position et/ou d'un changement de position de l'objet mesuré à partir du signal de mesure,
dans lequel le corps (4) présente, dans la direction longitudinale, une dimension nettement supérieure à une dimension dans la direction transversale, dans lequel un déplacement relatif entre le corps en forme de tige (4) et l'aimant (3) n'a pas lieu, dans lequel le corps en forme de tige (4) peut être relié avec l'aimant,
dans lequel l'aimant (3) et le corps en forme de tige (4) sont adaptés l'un à l'autre de façon à ce que l'aimant (3) impose, le long du corps, une répartition non linéaire du champ magnétique, dans lequel le détecteur de champ magnétique (2) présente une courbe caractéristique non linéaire et dans lequel la répartition non linéaire du champ magnétique le long du corps en forme de tige (4) et la courbe caractéristique non linéaire du détecteur de champ magnétique (2) sont adaptées l'une à l'autre de façon à ce qu'un signal de mesure du détecteur de champ magnétique (2) présente une courbe caractéristique approximativement linéaire pour la position et/ou le changement de position à déterminer.
